# EUROPEAN PATENT SPECIFICATION

(11) **EP 3 742 642 B1**
(45) Date of publication and mention of the grant of the patent: **25.08.2021**
(21) Application number: 19175854.9
(22) Date of filing: 22.05.2019
(51) Int. Cl.: H04L 1/16, H04L 1/18, H04L 1/00

(54) **NACK SIGNALING IN TDMA COMMUNICATIONS**
NACK-SIGNALISIERUNG IN TDMA-KOMMUNIKATIONEN
SIGNALISATION NACK DANS DES COMMUNICATIONS TDMA

(43) Date of publication of application: 25.11.2020
(73) Proprietor: Rohde & Schwarz GmbH & Co. KG, 81671 München (DE)
(72) Inventor: Bäßler, Andreas, 85253 Eisenhofen (DE); Hoffmann, Felix, 81375 München (DE); Kerger, Stefan, 85445 Aufkirchen (DE); Rehm, Patrick, 80937 München (DE); Detert, Thorben, 80634 München (DE); Wagner, Lars, 81827 München (DE)
(74) Representative: Körfer, Thomas

(56) References cited:
- EP-A1- 2 184 950
- EP-A1- 2 757 724
- US-B2- 8 565 197

## Description

The invention relates to Not-Acknowledge (NACK) signaling in radio communications systems, especially Time Division Multiple Access (TDMA) systems.

In a radio communications network, packets are to be delivered in a most robust manner to one or more participants. In a multiple access network protocol using TDMA, the data packet is subdivided into a number of data packet fragments. Each fragment is transmitted successively and then reconstituted to the entire packet by the receiver.

If just a single one of these data packet fragments is lost during transmission, the entire packet is lost and needs to be transmitted again. In lossy communications channels, the secure transmission of large data packets is therefore difficult. For example, EP 1 635 516 B1 shows an according radio packet communication method.

The document US 8,565,197 B2 shows a system and method for uplink data transfer in dynamic timeslot reduction. Especially, a transmission of NACK signals in reaction to not receiving a specific packet is shown there.

Accordingly, the object of the invention is to provide a communications system and method, which allow for a robust transmission of large data packets.

The object is solved by the features of the independent claims. The dependent claims contain further developments.

Any embodiments described in the following, which are not covered by the independent claims are to be understood as examples helpful for understanding the invention and not as inventive embodiments.

An inventive direct radio transmission communications system comprises a first transceiver and a plurality of second transceivers. The first transceiver is configured to transmit a data packet comprising at least one data packet fragment. The plurality of second transceivers are adapted to attempt to receive all the data packet fragments of the data packet. The plurality of second transceivers are configured to, if at least one data packet fragment of the data packet has not been received successfully by the at least one second transceiver, transmit a Not-Acknowledge, NACK, signal to the first transceiver. The NACK signal therein comprises a NACK sub-signal for each not successfully received data packet fragment of the data packet, each within a specific NACK signal sub-timeslot dedicated to a specific sequential data packet fragment number of the not successfully received data packet fragment of the data packet. The direct radio transmission communication system is a TDMA system. The first transceiver is configured to transmit the data packet fragments of the data packet in a transmission window. The transmission window comprises a number of timeslots equal to the number of data packet fragments of the data packet to transmit in addition to a management timeslot. The plurality of second transceivers are adapted to transmit the NACK signal to the first transceiver during the management timeslot. The management timeslot comprises the dedicated NACK signal sub-timeslot for each of the sequential data packet fragment numbers. The dedicated NACK signal sub-timeslots are arranged successively within the management timeslot, separated by preceding guard intervals. Each NACK signal sub-timeslot is comprised of a jitter timespace and a NACK timespace. The plurality of second transceivers are configured to randomly select a length of the jitter timespace, and to begin transmission of the NACK sub-signal after waiting during the jitter timespace within the NACK timespace. This allows for a very efficient transmission.

Advantageously, the plurality of second transceivers is configured to check which data packet fragments of the data packet have not been successfully received, before transmitting the NACK signal. This makes sure that only correct data packet fragments are indicated as notreceived.

Preferably the first transceiver is moreover configured to retransmit data packet fragments of the data packet, indicated as not received correctly. It is thereby assured that not the entire packet needs to be retransmitted, but only the actually lost fragments thereof.

Advantageously and preferably, the at least one data packet fragment of the data packet comprises a total number of data packet fragments within the data packet within a transmission window, and/or a fragment index, indicating an order of the data packet fragment within the data packet, and/or the sequential data packet fragment number, within the transmission window. This assures an efficient NACK signaling and an efficient reconstitution of the received packets.

Further advantageously and preferably, the management timeslot comprises at least one guard interval sub-timeslot followed by at least one NACK signal sub-timeslot. This assures a time-separation of successive signals.

Advantageously and preferably, the first transceiver is configured to perform a dynamic slot allocation before beginning of the transmission of the data packet. This further increases transmission efficiency.

Advantageously and preferably, after the dynamic slot allocation, the transmission has at least one transmission window followed by a management timeslot.

An inventive direct radio transmission communication method in a TDMA direct radio transmission communication system comprises transmitting a data packet comprising at least one data packet fragment by a first transceiver, attempting to receive all of the data packet fragments by a plurality of second transceivers, if at least one data packet fragment of the data packet has not been successfully received by the plurality of second transceivers, transmitting a NACK signal to the first transceiver. The NACK signal therein comprises a NACK sub-signal for each not successfully received data packet fragment of the data packet, each within a specific NACK signal sub-timeslot dedicated to a specific sequential data packet fragment number of the not successfully received data packet fragment of the data packet. The method further comprises transmitting, by the first transceiver, the data packet fragments of the data packet in a transmission window, wherein the transmission window comprises a number of timeslots equal to the number of data packet fragments of the data packet to transmit in addition to a management timeslot, transmitting, by the plurality of second transceivers, the NACK signal to the first transceiver during the management timeslot, the management timeslot comprising the dedicated NACK signal sub-timeslots for each of the sequential data packet fragment numbers. The dedicated NACK signal sub-timeslots are arranged successively within the management timeslot, separated by preceding guard intervals. Each NACK signal sub-timeslot is comprised of a jitter timespace and a NACK timespace. The method moreover comprises randomly selecting a length of the jitter timespace, by the plurality of second transceivers, and beginning transmitting the NACK sub-signal after waiting during the jitter timespace, within the NACK timespace, by the plurality of second transceivers. This allows for a very efficient transmission.

An inventive computer program comprises program code for performing the previously described method, when the computer program runs on a computer or a digital signal processor.

Exemplary embodiments of the invention are now further explained with regard to the drawings in which
- FIG. 1: shows a first embodiment of the communications system;
- FIG. 2: shows a detail of a second embodiment of the communications system;
- FIG. 3: shows details of a transmission in a third embodiment of the communications system, and
- FIG. 4: shows a first embodiment of the inventive method.

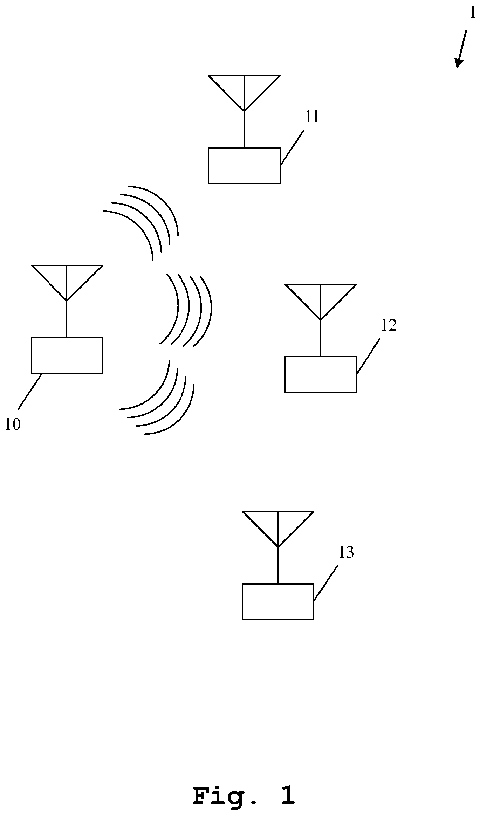

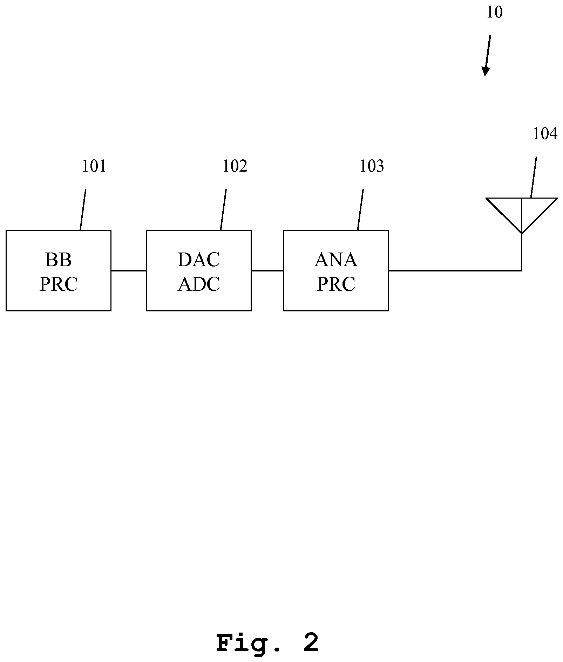

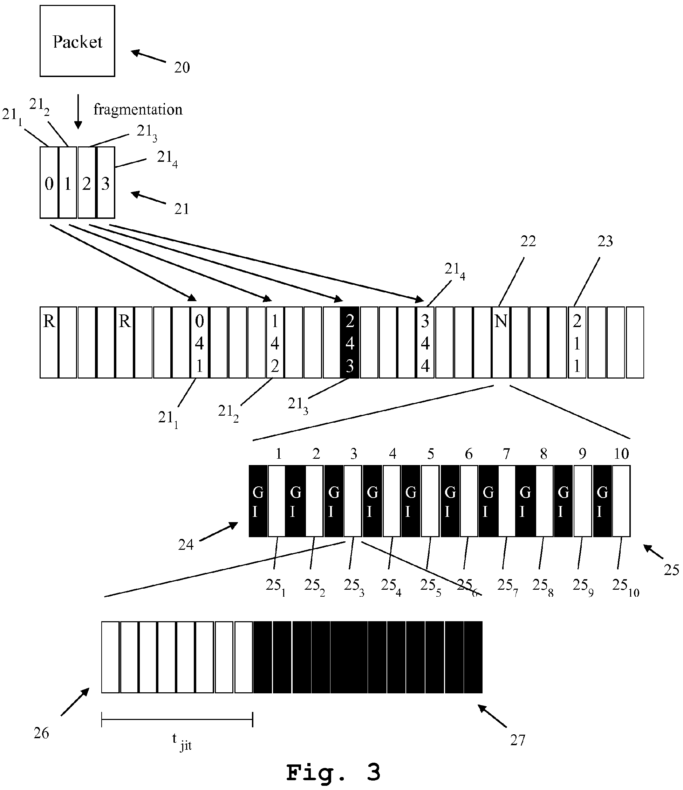

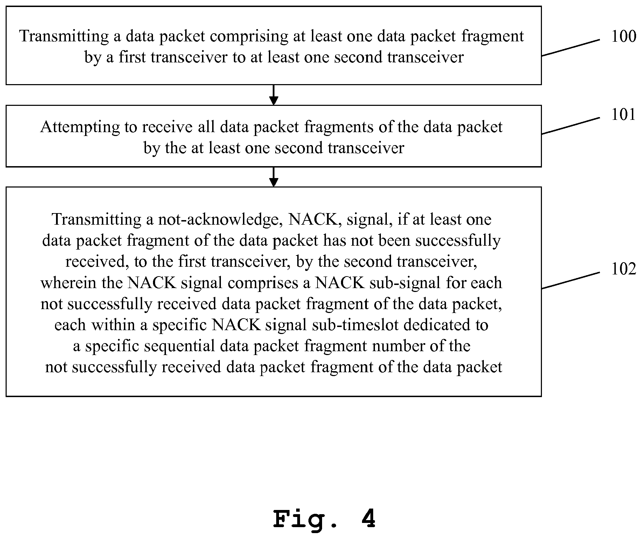

First, we demonstrate the general function of an according communications systems along FIG. 1. With regard to FIG. 2 and 3, further details of the function of the inventive communications system are described. Finally, along FIG. 4, an embodiment of the inventive method are shown and described in detail. Similar entities and reference numbers in different figures have been partially omitted.

In FIG. 1, a first embodiment of the inventive communications system 1 is shown. The communications system 1 comprises a first transceiver 10 and a number of second transceivers 11, 12, 13. The first transceiver 10 sends transmissions out to either all of the second transceivers 11-13 or to individual transceivers of the second transceivers 11-13. Regarding the structure of the transmissions, it is referred to the later elaborations regarding FIG. 3.

Each of the transceivers 10-13 is not only able to transmit signals, but also to receive signals. Therefore, the signals transmitted by the first transceiver 10 are ideally received by the second transceivers 11-13. Signals transmitted by any of the second transceivers 11-13 are ideally received by the first transceiver 10.

The transmission channel between the first transceiver 10 and the second transceivers 11-13 though is a real-world lossy transmission channel. Therefore, it is not guaranteed that every transmission by one of the transceivers 10-13 can be successfully received by all target transceivers.

In FIG. 2, a second embodiment of the inventive communications system is shown. Especially here, some more detail of the inner construction of one of the transceivers 10-13 is shown. Although in FIG. 2, an exemplary inner construction of transceiver 10 is shown, the construction may be similar also for the transceivers 11-13.

In FIG. 2, the transceiver 10 comprises a baseband processor 101 connected to a digital-analog-converter / analog-digital-converter 102, which in turn is connected to an analog processor 103. The analog processor 103 is again connected to an antenna 104.

When transmitting a signal, a digital baseband signal is generated by the baseband processor 101 and handed on to the digital-analog-converter / analog-digital-converter 102, which converts it to an analog baseband signal. This analog baseband signal is then handed on to the analog processor 103, which converts it to an analog radio frequency signal, which is handed on to the antenna 104 and successively transmitted. The digital baseband signal 101 comprises a number of data packets. The construction of a data packet is further shown in FIG. 3.

For example, the baseband processor 101 may comprise a data packet generator, which is configured to convert payload data into data packets according to a data packet structure shown in FIG. 3.

Moreover, the baseband processor 101 may comprise a source coder configured to add redundancy to the payload data before forming packets therefrom by the packet generator.

The baseband processor 101 may furthermore comprise a digital modulator, configured for performing a modulation to an intermediate frequency.

Moreover, the analog processor 103 may comprise a first bandpass filter configured to remove out of band signal components from the analog baseband signal provided by the digital analog converter/analog digital converter 102.

The analog processor 103 may furthermore comprise a mixer, configured to mix the analog baseband signal or the filtered analog baseband signal with a local oscillator signal in order to achieve a transmission frequency of the analog radio frequency signal. Furthermore, the analog processor 103 may additionally comprise a second bandpass filter for removing out of band components of the signal mixed by the mixer.

When receiving a signal, an analog radio frequency signal is received by the antenna 104 and handed on to the analog processor 103. The analog processor 103 converts it to an analog baseband signal and hands it on to the digital-analog-converter / analog-digital-converter 102, which converts it to a digital baseband signal. The digital baseband signal was handed on to the baseband processor 101, which receives the digital baseband signal and performs further processing thereupon.

Also, a received analog radio frequency signal may comprise data packets, which can then be extracted from the digital baseband signal. Regarding the construction of these data packets, it is again referred to the elaborations regarding FIG. 3.

Also, on the reception path, the before-mentioned components of the baseband processor 101 and the analog processor 103 may be used.

In FIG. 3, the data structure of a data packet 20 used by the communications system 1 is shown. The data packet 20 is comprised of a number of data packet fragments 21. In this example, the data packet 20 comprises 4 data packet fragments 21₁, 21₂, 21₃ and 21_{4'}. In order to better visualize the construction of the transmission, the data packet fragments 21₁-21₄ are drawn apart below the initial display of the data packet fragments 21.

Preferably, each data packet fragment 21 comprises an indicator of the number of data packet fragments 21₁-21₄ within the transmission window. This is indicated by the middle number within each of the data packet fragments 21₁-21₄. Moreover, preferably, each data packet fragment 21₁-21₄ comprises a successive number of the data packet fragment 21₁-21₄ within the data packet. This corresponds to the upper number in any of the data packet fragments 21₁-21₄, as displayed in FIG. 3. Finally, advantageously, each data packet fragment 21₁-21₄ comprises a sequential data packet fragment number within the transmission window. This corresponds to the lower number as depicted in FIG. 3.

In addition to the data packet fragments 21, here a number of management slots R used for reservation are shown.

These are not relevant to the present invention though. Moreover, directly after the transmission of the last data packet fragment 21₄, a management slot 22 is transmitted. The management slot 21 is further shown in detail below. The data packet fragments 21₁-21₄ together with the management slot 22 form a transmission window. The management slot 22 comprises a number of guard intervals 24 which separate NACK signal sub-timeslots 25₁-25₁₀. Each of these NACK signal sub-timeslots 25 directly correspond to a data packet fragment number.

Each NACK signal sub-timeslot 25 corresponds to one of the sequential data packet fragment numbers within the transmission window. This means that the second transceiver 11 - 13 reports a NACK signal for each data packet fragment 21 it did not successfully receive, within the correct NACK signal sub-timeslot of the respective data packet fragment. For example, here the data packet fragment 21₃ has not been successfully received. This is indicated by the different color scheme. This results in the second transceiver reporting back in NACK signal sub-timeslot 25₃ that this data packet fragment 21₃ has not been successfully received by transmitting a NACK signal in this NACK signal sub-timeslot 25₃.

In the lower part of FIG. 3, finally the construction of a NACK signal sub-timeslot 25, especially of the NACK signal sub-timeslot 25₃ is shown in detail. The NACK signal sub-timeslot consists of a jitter timespace 26 of a length tⱼᵢₜ and a NACK timespace 27. The NACK signal is transmitted within the NACK timespace 27. The length of the jitter timespace 26 tⱼᵢₜ is selected randomly by the second transceiver wishing to transmit the NACK signal. The length tⱼᵢₜ is chosen so that enough time remains for transmitting the NACK signal within the NACK timespace. The jitter timespace can also have a length of tⱼᵢₜ = 0. In a multicast environment, in which a plurality of second transceivers 11 - 14 receive the transmission, having each second transceiver having not successfully received the data packet fragment, randomly chose the length of the jitter time frame tⱼᵢₜ assures that the NACK signals do not destructively overlap due to transmission phase shift.

By receiving the management slot 22, the first transceiver 10 knows which data packet fragments 21 have not been correctly received by at least one second transceiver 11 - 13, and therefore knows, which data packets 20 and data packet fragments 21 need to be retransmitted. This is also displayed in FIG. 3. Since the first transceiver 10 learns from the management slot 22 that the data packet fragment 21₃ has not been correctly received by at least one second transceiver 11 - 13, it retransmits the data packet fragment 21₃ as data packet fragment 23 after the management slot 22. The number of the data packet fragment within the timeslot - 2 - remains the same, while the number of data packet fragments transmitted within the transmission window is now 1 and the total number of data packet fragments within the transmission window is also 1.

Advantageously, the first transceiver 10 performs a dynamic slot allocation before beginning the transmission of the data packet. This dynamic slot allocation divides the packets into a sensible number of data packet fragments and prepares them for transmission.

In FIG. 4, a first embodiment of the inventive method is shown in a flow diagram.

In a first step 100, a data packet comprising at least one data packet fragment is transmitted by a first transceiver to at least one second transceiver.

In a second step 101, the at least one second transceiver attempts to receive all data packet fragments of the data packet.

In a third step 102, a not-acknowledge, NACK, signal, is transmitted, if at least one data packet fragment of the data packet has not been successfully received, to the first transceiver, by the second transceiver. The NACK signal therein comprises a NACK sub-signal for each not successfully received data packet fragment of the data packet, each within a specific NACK signal sub-timeslot dedicated to a specific sequential data packet fragment number of the not successfully received data packet fragment of the data packet.

It should be noted that the elaborations regarding FIG. 1 - FIG. 3 are also to be understood as disclosed with regard to the inventive method while on the other hand the elaborations regarding FIG. 4 are also to be understood as disclosed in regard to the inventive communications system.

The invention is not limited to the provided examples and especially not to a specific communication standard, especially not to a specific number of packet fragments.

The invention may be applied to many different communication standards. The invention is limited by the scope of the appended claims.

## Claims

1. A direct radio transmission communication system (1), comprising a first transceiver (10) and a plurality of second transceivers (11, 12, 13),
wherein the first transceiver (10) is configured to transmit a data packet (20) comprising at least one data packet fragment (21₁, 21₂, 21₃, 21₄, 21₅),
wherein the plurality of second transceivers (11, 12, 13) are configured to attempt to receive all the data packet fragments (21₁, 21₂, 21₃, 21₄, 21₅) of the data packet (20),
wherein the plurality of second transceivers (11, 12, 13) are configured to transmit a not-acknowledge, NACK, signal, if at least one data packet fragment (21₁, 21₂, 21₃, 21₄, 21₅) of the data packet (20) has not been successfully received, to the first transceiver (10),
wherein the NACK signal comprises a NACK sub-signal for each not successfully received data packet fragment (21₁, 21₂, 21₃, 21₄, 21₅) of the data packet (20), each within a specific NACK signal sub-timeslot (25₁, 25₂, 25₃, 25₄, 25₅, 25₆, 25₇, 25₈, 25₉, 25₁₀) dedicated to a specific sequential data packet fragment number of the not successfully received data packet fragment (21₁, 21₂, 21₃, 21₄, 21₅) of the data packet (20),
wherein the direct radio transmission communication system (1) is a TDMA system,
wherein the first transceiver (10) is configured to transmit the data packet fragments (21₁, 21₂, 21₃, 21₄, 21₅) of the data packet (20) in a transmission window,
wherein the transmission window comprises a number of timeslots equal to the number of data packet fragments (21₁, 21₂, 21₃, 21₄, 21₅) of the data packet (20) to transmit in addition to a management timeslot (22), and
wherein the plurality of second transceivers (11, 12, 13) are adapted to transmit the NACK signal to the first transceiver (10) during the management timeslot (22),
wherein the management timeslot (22) comprises the dedicated NACK signal sub-timeslots (25₁, 25₂, 25₃, 25₄, 25₅, 25₆, 25₇, 25₈, 25₉, 25₁₀) for each of the sequential data packet fragment numbers (21₁, 21₂, 21₃, 21₄, 21₅), and
wherein the dedicated NACK signal sub-timeslots (25₁, 25₂, 25₃, 25₄, 25₅, 25₆, 25₇, 25₈, 25₉, 25₁₀) are arranged successively within the management timeslot (22), separated by preceding guard intervals (24),
wherein each NACK signal sub-timeslot (25₁, 25₂, 25₃, 25₄, 25₅, 25₆, 25₇, 25₈, 25₉, 25₁₀) is comprised of a jitter timespace (26) and a NACK timespace (27), and
wherein the plurality of second transceivers (11, 12, 13) are configured to
- randomly select a length (tⱼᵢₜ) of the jitter timespace (26), and
- begin transmission of the NACK sub-signal after waiting during the jitter timespace (26), within the NACK timespace (27).

2. The direct radio transmission communication system (1) according to claim 1,
wherein the plurality of second transceivers (11, 12, 13) are configured to check which data packet fragments (21₁, 21₂, 21₃, 21₄, 21₅) of the data packet (20) have not been successfully received, before transmitting the NACK signal.

3. The direct radio transmission communication system (1) according to claim 1 or 2,
wherein the first transceiver (10) is configured to retransmit data packet fragments (21₁, 21₂, 21₃, 21₄, 21₅) of the data packet (20) indicated as not received correctly.

4. The direct radio transmission communication system (1) according to any of the claims 1 to 3,
wherein the at least one data packet fragment (21₁, 21₂, 21₃, 21₄, 21₅) of the data packet (20) comprises:
- a total number of data packet fragments (21₁, 21₂, 21₃, 21₄, 21₅) within the data packet (20), within a transmission window, and/or
- a fragment index, indicating an order of the data packet fragment (21₁, 21₂, 21₃, 21₄, 21₅) within the data packet (20), and/or
- the sequential data packet fragment number, within a transmission window.

5. The direct radio transmission communication system (1) according to any of the claims 1 to 4,
wherein the management timeslot (22) comprises at least one guard interval sub-timeslot (24) followed by at least one NACK signal sub-timeslot (25₁, 25₂, 25₃, 25₄, 25₅, 25₆, 25₇, 25₈, 25₉, 25₁₀).

6. The direct radio transmission communication system (1), according to any of the claims 1 to 5,
wherein the first transceiver (10) is configured to perform a dynamic slot allocation before the beginning the transmission of the data packet (20).

7. A direct radio transmission communication method in a TDMA direct radio transmission communication system (1), comprising:
- transmitting a data packet (20) comprising at least one data packet fragment (21₁, 21₂, 21₃, 21₄, 21₅), by a first transceiver (10),
- attempting to receive all the data packet fragments (21₁, 21₂, 21₃, 21₄, 21₅) of the data packet (20), by a plurality of second transceivers (11, 12, 13),
- transmitting a not-acknowledge, NACK, signal, if at least one data packet fragment (21₁, 21₂, 21₃, 21₄, 21₅) of the data packet (20) has not been successfully received, to the first transceiver (10), by the plurality of second transceivers (111, 12, 13),
wherein the NACK signal comprises a NACK sub-signal for each not successfully received data packet fragment (21₁, 21₂, 21₃, 21₄, 21₅) of the data packet (20), each within a specific NACK signal sub-timeslot (25₁, 25₂, 25₃, 25₄, 25₅, 25₆, 25₇, 25₈, 25₉, 25₁₀) dedicated to a specific sequential data packet fragment number of the not successfully received data packet fragment (21₁, 21₂, 21₃, 21₄, 21₅) of the data packet (20),
wherein the method further comprises:
- transmitting, by the first transceiver (10), the data packet fragments (21₁, 21₂, 21₃, 21₄, 21₅) of the data packet (20) in a transmission window, wherein the transmission window comprises a number of timeslots equal to the number of data packet fragments (21₁, 21₂, 21₃, 21₄, 21₅) of the data packet (20) to transmit in addition to a management timeslot (22), and
- transmitting, by the plurality of second transceivers (11, 12, 13), the NACK signal to the first transceiver (10) during the management timeslot (22), wherein the management timeslot (22) comprises the dedicated NACK signal sub-timeslots (25₁, 25₂, 25₃, 25₄, 25₅, 25₆, 25₇, 25₈, 25₉, 25₁₀) for each of the sequential data packet fragment numbers (21₁, 21₂, 21₃, 21₄, 21₅) , and
wherein the dedicated NACK signal sub-timeslots (25₁, 25₂, 25₃, 25₄, 25₅, 25₆, 25₇, 25₈, 25₉, 25₁₀) are arranged successively within the management timeslot (22), separated by preceding guard intervals (24),
wherein each NACK signal sub-timeslot (25₁, 25₂, 25₃, 25₄, 25₅, 25₆, 25₇, 25₈, 25₉, 25₁₀) is comprised of a jitter timespace (26) and a NACK timespace (27), and
- randomly selecting a length (tⱼᵢₜ) of the jitter timespace (26), by the plurality of second transceivers (11, 12, 13), and
- beginning transmitting the NACK sub-signal after waiting during the jitter timespace (26), within the NACK timespace (27), by the plurality of second transceivers (11, 12, 13).

8. A computer program comprising instructions which, when the program is executed by a computer, cause the computer to carry out the method of claim 7.

## Patentansprüche

1. Kommunikationssystem zur direkten Funkübertragung (1), umfassend einen ersten Transceiver (10) und eine Vielzahl von zweiten Transceivern (11, 12, 13),
wobei der erste Transceiver (10) für die Übertragung eines Datenpakets (20) konfiguriert ist, das mindestens ein Datenpaketfragment (21₁, 21₂, 21₃, 21₄, 21₅) enthält,
wobei die Vielzahl der zweiten Transceiver (11, 12, 13) dafür konfiguriert ist zu versuchen, alle Datenpaketfragmente (21₁, 21₂, 21₃, 21₄, 21₅) des Datenpakets (20) zu empfangen,
wobei die Vielzahl der zweiten Transceiver (11, 12, 13) dafür konfiguriert ist, wenn mindestens ein Datenpaketfragment (21₁, 21₂, 21₃, 21₄, 21₅) des Datenpakets (20) nicht erfolgreich empfangen wurde, ein Not-Acknowledge-(NACK-)Signal an den ersten Transceiver (10) zu senden, wobei das NACK-Signal ein NACK-Teilsignal für jedes nicht erfolgreich empfangene Datenpaketfragment (21₁, 21₂, 21₃, 21₄, 21₅) des Datenpakets (20) enthält, jeweils innerhalb eines spezifischen NACK-Signal-Teilzeitschlitzes (25₁, 25₂, 25₃, 25₄, 25₅, 25₆, 25₇, 25₈, 25₉, 25₁₀), welcher für eine bestimmte sequenzielle Datenpaketfragment-Nummer des nicht erfolgreich empfangenen Datenpaketfragments (21₁, 21₂, 21₃, 21₄, 21₅) des Datenpakets (20) dediziert ist,
wobei das Kommunikationssystem zur direkten Funkübertragung (1) ein TDMA-System ist,
wobei der erste Transceiver (10) dafür konfiguriert ist, die Datenpaketfragmente (21₁, 21₂, 21₃, 21₄, 21₅) des Datenpakets (20) in einem Übertragungsfenster zu übertragen, wobei das Übertragungsfenster eine Anzahl von Zeitschlitzen umfasst, die der Anzahl der Datenpaketfragmente (21₁, 21₂, 21₃, 21₄, 21₅) des zu übertragenden Datenpakets (20) entspricht, zusätzlich zu einem Verwaltungszeitschlitz (22), und wobei die Vielzahl der zweiten Transceiver (11, 12, 13) für die Übertragung des NACK-Signals zu dem ersten Transceiver (10) während des Verwaltungszeitschlitzes (22) angepasst ist, wobei der Verwaltungszeitschlitz (22) die dedizierten NACK-Signal-Teilzeitschlitze (25₁, 25₂, 25₃, 25₄, 25₅, 25₆, 25₇, 25₈, 25₉, 25₁₀)für jede der sequenziellen Datenpaketfragment-Nummern (21₁, 21₂, 21₃, 21₄, 21₅) umfasst, und wobei die dedizierten NACK-Signal-Teilzeitschlitze (25₁, 25₂, 25₃, 25₄, 25₅, 25₆, 25₇, 25₈, 25₉, 25₁₀) aufeinander folgend innerhalb des Verwaltungszeitschlitzes (22) angeordnet sind, getrennt durch vorangehende Schutzintervalle (24),
wobei jeder NACK-Signal-Teilzeitschlitz (25₁, 25₂, 25₃, 25₄, 25₅, 25₆, 25₇, 25₈, 25₉, 25₁₀) aus einem Jitter-Zeitraum (26) und einem NACK-Zeitraum (27) besteht, und
wobei die Vielzahl der zweiten Transceiver (11, 12, 13) konfiguriert ist zum
- zufälligen Auswählen einer Länge (tⱼᵢₜ) des Jitter-Zeitraums (26), und
- Starten der Übertragung des NACK-Teilsignals, nach dem Warten während des Jitter-Zeitraums (26), innerhalb des NACK-Zeitraums (27).

2. Kommunikationssystem zur direkten Funkübertragung (1) nach Anspruch 1,
wobei die Vielzahl der zweiten Transceiver (11, 12, 13) dafür konfiguriert ist zu prüfen, welche Datenpaketfragmente (21₁ 21₂, 21₃, 21₄, 21₅) des Datenpakets (20) nicht erfolgreich empfangen wurden, bevor das NACK-Signal gesendet wird.

3. Kommunikationssystem zur direkten Funkübertragung (1) nach Anspruch 1 oder 2,
wobei der erste Transceiver (10) dafür konfiguriert ist, die Datenpaketfragmente (21₁, 21₂, 21₃, 21₄, 21₅) des Datenpakets (20) erneut zu übertragen, die als nicht korrekt empfangen angezeigt werden.

4. Kommunikationssystem zur direkten Funkübertragung (1) nach einem der Ansprüche 1 bis 3,
wobei das mindestens eine Datenpaketfragment (21₁, 21₂, 21₃, 21₄, 21₅) des Datenpakets (20) umfasst:
- eine Gesamtzahl von Datenpaketfragmenten (21₁, 21₂, 21₃, 21₄, 21₅) in dem Datenpaket (20), innerhalb eines Übertragungsfensters und/oder
- einen Fragmentindex, der eine Reihenfolge des Datenpaketfragments (21₁, 21₂, 21₃, 21₄, 21₅) in dem Datenpaket (20) angibt und/oder
- die sequenzielle Nummer des Datenpaketfragments innerhalb eines Übertragungsfensters.

5. Kommunikationssystem zur direkten Funkübertragung (1) nach einem der Ansprüche 1 bis 4,
wobei der Verwaltungszeitschlitz (22) mindestens einen Schutzintervall-Teilzeitschlitz (24) umfasst, gefolgt von mindestens einem NACK-Signal-Teilzeitschlitz (25₁, 25₂, 25₃, 25₄, 25₅, 25₆, 25₇, 25₈, 25₉, 25₁₀) .

6. Kommunikationssystem zur direkten Funkübertragung (1) nach einem der Ansprüche 1 bis 5,
wobei der erste Transceiver (10) dafür konfiguriert ist, vor Beginn der Übertragung des Datenpakets (20) eine dynamische Schlitzzuweisung durchzuführen.

7. Kommunikationsverfahren zur direkten Funkübertragung in einem TDMA-Kommunikationssystem zur direkten Funkübertragung (1), umfassend:
- Übertragen eines Datenpakets (20), das mindestens ein Datenpaketfragment (21₁, 21₂, 21₃, 21₄, 21₅) enthält, durch einen ersten Transceiver (10),
- Versuchen, alle Datenpaketfragmente (21₁, 21₂, 21₃, 21₄, 21₅) des Datenpakets (20) durch eine Vielzahl von zweiten Transceivern (11, 12, 13) zu empfangen,
- Senden eines Not-Acknowledge-(NACK-)Signals, wenn mindestens ein Datenpaketfragment (21₁, 21₂, 21₃, 21₄, 21₅) des Datenpakets (20) durch die Vielzahl von zweiten Transceivern (11, 12, 13) nicht erfolgreich empfangen wurde, an den ersten Transceiver (10),
wobei das NACK-Signal ein NACK-Teilsignal für jedes nicht erfolgreich empfangene Datenpaketfragment (21₁, 21₂, 21₃, 21₄, 21₅) des Datenpakets (20) umfasst, jeweils innerhalb eines spezifischen NACK-Signal-Teilzeitschlitzes (25₁, 25₂, 25₃, 25₄, 25₅, 25₆, 25₇, 25₈, 25₉, 25₁₀), der für eine bestimmte sequenzielle Datenpaketfragment-Nummer des nicht erfolgreich empfangenen Datenpaketfragments (21₁, 21₂, 21₃, 21₄, 21₅) des Datenpakets (20) dezidiert ist,
wobei das Verfahren weiter umfasst:
- Übertragen der Datenpaketfragmente (21₁, 21₂, 21₃, 21₄, 21₅) des Datenpakets (20) durch den ersten Transceiver (10) in einem Übertragungsfenster, wobei das Übertragungsfenster eine Anzahl von Zeitschlitzen umfasst, die der Anzahl der Datenpaketfragmente (21₁, 21₂, 21₃, 21₄, 21₅) des zu übertragenden Datenpakets (20) entspricht, zusätzlich zu einem Verwaltungszeitschlitz (22), und
- Senden, durch die Vielzahl von zweiten Transceivern (11, 12, 13), des NACK-Signals an den ersten Transceiver (10) während des Verwaltungszeitschlitzes (22), wobei der Verwaltungszeitschlitz (22) die dedizierten NACK-Signal-Teilzeitschlitze (25₁, 25₂, 25₃, 25₄, 25₅, 25₆, 25₇, 25₈, 25₉, 25₁₀) für jede der sequenziellen Datenpaketfragment-Nummern (21₁, 21₂, 21₃, 21₄, 21₅) umfasst,
wobei die dedizierten NACK-Signal-Teilzeitschlitze (25₁, 25₂, 25₃, 25₄, 25₅, 25₆, 25₇, 25₈, 25₉, 25₁₀) aufeinander folgend innerhalb des Verwaltungszeitschlitzes (22) angeordnet sind, getrennt durch vorangehende Schutzintervalle (24),
wobei jeder NACK-Signal-Teilzeitschlitz (25₁, 25₂, 25₃, 25₄, 25₅, 25₆, 25₇, 25₈, 25₉, 25₁₀) aus einem Jitter-Zeitraum (26) und einem NACK-Zeitraum (27) besteht, und
- zufälliges Auswählen einer Länge (tⱼᵢₜ) des Jitter-Zeitraums (26), durch die Vielzahl von zweiten Transceivern (11, 12, 13), und
- Starten der Übertragung des NACK-Teilsignals, nach dem Warten während des Jitter-Zeitraums (26), innerhalb des NACK-Zeitraums (27), durch die Vielzahl von zweiten Transceivern (11, 12, 13).

8. Computerprogramm, das Befehle umfasst, die bei Ausführung des Programms durch einen Computer bewirken, dass der Computer das Verfahren nach Anspruch 7 durchführt.

## Revendications

1. Système de communication par émission radio directe (1), comprenant un premier émetteur-récepteur (10) et une pluralité de seconds émetteurs-récepteurs (11, 12, 13),
dans lequel le premier émetteur-récepteur (10) est configuré pour émettre un paquet de données (20) comprenant au moins un fragment de paquet de données (21₁, 21₂, 21₃, 21₄, 21₅),
dans lequel la pluralité de seconds émetteurs-récepteurs (11, 12, 13) sont configurés pour tenter de recevoir tous les fragments de paquet de données (21₁, 21₂, 21₃, 21₄, 21₅) du paquet de données (20),
dans lequel la pluralité de seconds émetteurs-récepteurs (11, 12, 13) sont configurés pour émettre un signal de non-accusé de réception, NACK, si au moins un fragment de paquet de données (21₁, 21₂, 21₃, 21₄, 21₅) du paquet de données (20) n'a pas été reçu avec succès, vers le premier émetteur-récepteur (10),
dans lequel le signal de NACK comprend un sous-signal de NACK pour chaque fragment de paquet de données (21₁, 21₂, 21₃, 21₄, 21₅) non reçu avec succès du paquet de données (20), chacun au sein d'un sous-créneau temporel de signal de NACK (25₁, 25₂, 25₃, 25₄, 25₅, 25₆, 25₇, 25₈, 25₉, 25₁₀) spécifique dédié à un numéro de fragment de paquet de données séquentiel spécifique du fragment de paquet de données (21₁, 21₂, 21₃, 21₄, 21₅) non reçu avec succès du paquet de données (20),
dans lequel le système de communication par émission radio directe (1) est un système à accès multiple par répartition dans le temps, TDMA,
dans lequel le premier émetteur-récepteur (10) est configuré pour émettre les fragments de paquet de données (21₁, 21₂, 21₃, 21₄, 21₅) du paquet de données (20) dans une fenêtre d'émission, dans lequel la fenêtre d'émission comprend un nombre de créneaux temporels égal au nombre de fragments de paquet de données (21₁, 21₂, 21₃, 21₄, 21₅) du paquet de données (20) à émettre en plus d'un créneau temporel de gestion (22), et
dans lequel la pluralité de seconds émetteurs-récepteurs (11, 12, 13) sont conçus pour émettre le signal de NACK vers le premier émetteur-récepteur (10) pendant le créneau temporel de gestion (22), dans lequel le créneau temporel de gestion (22) comprend les sous-créneaux temporels de signal de NACK (25₁, 25₂, 25₃, 25₄, 25₅, 25₆, 25₇, 25₈, 25₉, 25₁₀) dédiés pour chacun des numéros de fragments de paquets de données (21₁, 21₂, 21₃, 21₄, 21₅) séquentiels, et dans lequel les sous-créneaux temporels de signal de NACK (25₁, 25₂, 25₃, 25₄, 25₅, 25₆, 25₇, 25₈, 25₉, 25₁₀) dédiés sont agencés successivement au sein du créneau temporel de gestion (22), séparés par des intervalles de garde précédents (24), dans lequel chaque sous-créneau temporel de signal de NACK (25₁, 25₂, 25₃, 25₄, 25₅, 25₆, 25₇, 25₈, 25₉, 25₁₀) est constitué d'un espace temporel de gigue (26) et d'un espace temporel de NACK (27), et
dans lequel la pluralité de seconds émetteurs-récepteurs (11, 12, 13) sont configurés pour
- sélectionner de manière aléatoire une longueur (tⱼᵢₜ) de l'espace temporel de gigue (26), et
- débuter l'émission du sous-signal de NACK après une attente pendant l'espace temporel de gigue (26), au sein de l'espace temporel de NACK (27).

2. Système de communication par émission radio directe (1) selon la revendication 1,
dans lequel la pluralité de seconds émetteurs-récepteurs (11, 12, 13) sont configurés pour vérifier quels fragments de paquet de données (21₁, 21₂, 21₃, 21₄, 21₅) du paquet de données (20) n'ont pas été reçus avec succès, avant l'émission du signal de NACK.

3. Système de communication par émission radio directe (1) selon la revendication 1 ou 2,
dans lequel le premier émetteur-récepteur (10) est configuré pour émettre à nouveau les fragments de paquet de données (21₁, 21₂, 21₃, 21₄, 21₅) du paquet de données (20) indiqués comme non correctement reçus.

4. Système de communication par émission radio directe (1) selon l'une quelconque des revendications 1 à 3,
dans lequel l'au moins un fragment de paquet de données (21₁, 21₂, 21₃, 21₄, 21₅) du paquet de données (20) comprend :
- un nombre total de fragments de paquet de données (21₁, 21₂, 21₃, 21₄, 21₅) au sein du paquet de données (20), au sein d'une fenêtre d'émission, et/ou
- un indice de fragment, indiquant un ordre du fragment de paquet de données (21₁, 21₂, 21₃, 21₄, 21₅) au sein du paquet de données (20), et/ou
- le numéro de fragment de paquet de données séquentiel, au sein d'une fenêtre d'émission.

5. Système de communication par émission radio directe (1) selon l'une quelconque des revendications 1 à 4,
dans lequel le créneau temporel de gestion (22) comprend au moins un sous-créneau temporel d'intervalle de garde (24) suivi d'au moins un sous-créneau temporel de signal de NACK (25₁, 25₂, 25₃, 25₄, 25₅, 25₆, 25₇, 25₈, 25₉, 25₁₀).

6. Système de communication par émission radio directe (1), selon l'une quelconque des revendications 1 à 5,
dans lequel le premier émetteur-récepteur (10) est configuré pour réaliser une allocation de créneau dynamique avant le début de l'émission du paquet de données (20).

7. Procédé de communication par émission radio directe dans un système de communication par émission radio directe (1) à TDMA, comprenant :
- l'émission d'un paquet de données (20) comprenant au moins un fragment de paquet de données (21₁, 21₂, 21₃, 21₄, 21₅), par un premier émetteur-récepteur (10),
- la tentative de recevoir tous les fragments de paquet de données (21₁, 21₂, 21₃, 21₄, 21₅) du paquet de données (20), par une pluralité de seconds émetteurs-récepteurs (11, 12, 13),
- l'émission d'un signal de non-accusé de réception, NACK, si au moins un fragment de paquet de données (21₁, 21₂, 21₃, 21₄, 21₅) du paquet de données (20) n'a pas été reçu avec succès, vers le premier émetteur-récepteur (10), par la pluralité de seconds émetteurs-récepteurs (11, 12, 13),
dans lequel le signal de NACK comprend un sous-signal de NACK pour chaque fragment de paquet de données (21₁, 21₂, 21₃, 21₄, 21₅) non reçu avec succès du paquet de données (20), chacun au sein d'un sous-créneau temporel de signal de NACK (25₁, 25₂, 25₃, 25₄, 25₅, 25₆, 25₇, 25₈, 25₉, 25₁₀) spécifique dédié à un numéro de fragment de paquet de données séquentiel spécifique du fragment de paquet de données (21₁, 21₂, 21₃, 21₄, 21₅) non reçu avec succès du paquet de données (20),
dans lequel le procédé comprend en outre :
- l'émission, par le premier émetteur-récepteur (10), des fragments de paquet de données (21₁, 21₂, 21₃, 21₄, 21₅) du paquet de données (20) dans une fenêtre d'émission, dans lequel la fenêtre d'émission comprend un nombre de créneaux temporels égal au nombre de fragments de paquet de données (21₁, 21₂, 21₃, 21₄, 21₅) du paquet de données (20) à émettre en plus d'un créneau temporel de gestion (22), et
- l'émission, par la pluralité de seconds émetteurs-récepteurs (11, 12, 13), du signal de NACK vers le premier émetteur-récepteur (10) pendant le créneau temporel de gestion (22), dans lequel le créneau temporel de gestion (22) comprend les sous-créneaux temporels de signal de NACK (25₁, 25₂, 25₃, 25₄, 25₅, 25₆, 25₇, 25₈, 25₉, 25₁₀) dédiés pour chacun des numéros de fragments de paquets de données (21₁, 21₂, 21₃, 21₄, 21₅) séquentiels et dans lequel les sous-créneaux temporels de signal de NACK (25₁, 25₂, 25₃, 25₄, 25₅, 25₆, 25₇, 25₈, 25₉, 25₁₀) dédiés sont agencés successivement au sein du créneau temporel de gestion (22), séparés par des intervalles de garde précédents (24), dans lequel chaque sous-créneau temporel de signal de NACK (25₁, 25₂, 25₃, 25₄, 25₅, 25₆, 25₇, 25₈, 25₉, 25₁₀) est constitué d'un espace temporel de gigue (26) et d'un espace temporel de NACK (27), et
- la sélection aléatoire d'une longueur (tⱼᵢₜ) de l'espace temporel de gigue (26), par la pluralité de seconds émetteurs-récepteurs (11, 12, 13), et
- le début de l'émission du sous-signal de NACK après une attente pendant l'espace temporel de gigue (26), au sein de l'espace temporel de NACK (27), par la pluralité de seconds émetteurs-récepteurs (11, 12, 13).

8. Programme d'ordinateur comprenant des instructions qui, lorsque le programme est exécuté par un ordinateur, amènent l'ordinateur à mettre en œuvre le procédé selon la revendication 7.
